Europäisches Patentamt

European Patent Office

Office européen des brevets

(11) **EP 1 289 335 A2**

(12) **EUROPÄISCHE PATENTANMELDUNG**

(43) Veröffentlichungstag:
05.03.2003 Patentblatt 2003/10

(51) Int Cl.⁷: $H04Q\ 11/04$, $H04Q\ 3/00$

(21) Anmeldenummer: 02018396.8

(22) Anmeldetag: 14.08.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **29.08.2001 DE 10142271**

(71) Anmelder: **SIEMENS AKTIENGESELLSCHAFT**
**80333 München (DE)**

(72) Erfinder:
• **Franz, Mathias**
**10178 Berlin (DE)**
• **Jugel, Alfred**
**82538 Geretsried (DE)**
• **Kleiner, Patrick**
**81476 München (DE)**
• **Löbig, Norbert, Dr.**
**64291 Darmstadt (DE)**

(54) **Verfahren und Vorrichtung zur Laststeuerung von vermittlungstechnischen Ressourcen**

(57) Die vorliegende Erfindung betrifft ein Verfahren zur Laststeuerung einer externen vermittlungstechnischen Ressource (1) zum Bereitstellen von sprachkanalbezogenen Funktionen in einem Vermittlungsknoten (5), wobei die Ressource (1) durch den Vermittlungsknoten (5) gesteuert wird. Das erfindungsgemäße Verfahren beinhaltet die Schritte Ermitteln der Auslastung der Ressource (1), Signalisierung der Auslastung der Ressource (1) an den Vermittlungsknoten (5), und Regulieren der Anzahl der verfügbaren sprachkanalbezogenen Funktionen in Abhängigkeit von der Auslastung der Ressource (1).

Die vorliegende Erfindung betrifft weiterhin eine vermittlungstechnische Ressource (1) und einen Vermittlungsknoten (5) zur Durchführung dieses Verfahrens.

## FIG 5

EP 1 289 335 A2

## Beschreibung

Die vorliegende Erfindung betrifft ein Verfahren zur Laststeuerung einer externen vermittlungstechnischen Ressource zum Bereitstellen von sprachkanalbezogenen Funktionen, sowie eine vermittlungstechnische Ressource und einen Vermittlungsknoten zur Durchführung dieses Verfahrens.

Ein Vermittlungsknoten in einem Telekommunikationsnetz besteht im Allgemeinen aus peripheren Einheiten (d. h. Anschlusseinrichtungen für Teilnehmer oder Leitungen), einer zentralen Rechnerplattform, einer Nachrichtenverteil-einrichtung und weiteren zentralen Einrichtungen.

Die peripheren Einrichtungen erfüllen wesentliche, an die Sprachkanäle der peripheren Einrichtung gebundene vermittlungstechnische Aufgaben. Sie enthalten daher vermittlungstechnische, betriebstechnische und administrative Programme sowie die der Einrichtung zugehörigen Dateninformationen wie Anschlusslage, Signalisierung, Berechtigungen, Rufnummern, individuelle Charakteristika von Verbindungsleitungen und Teilnehmeranschlüssen sowie Ausbauzustand und Konfiguration der peripheren Einrichtung.

Die zentrale Rechnerplattform dient der koordinierenden Steuerung des Verbindungsauf- und -abbaus sowie der Reaktionen auf administrative und fehlerbedingte Konfigurationsveränderungen. Sie ist über das Nachrichtenverteilsystem mit den peripheren Einrichtungen verbunden, die auf diesem Wege auch miteinander kommunizieren.

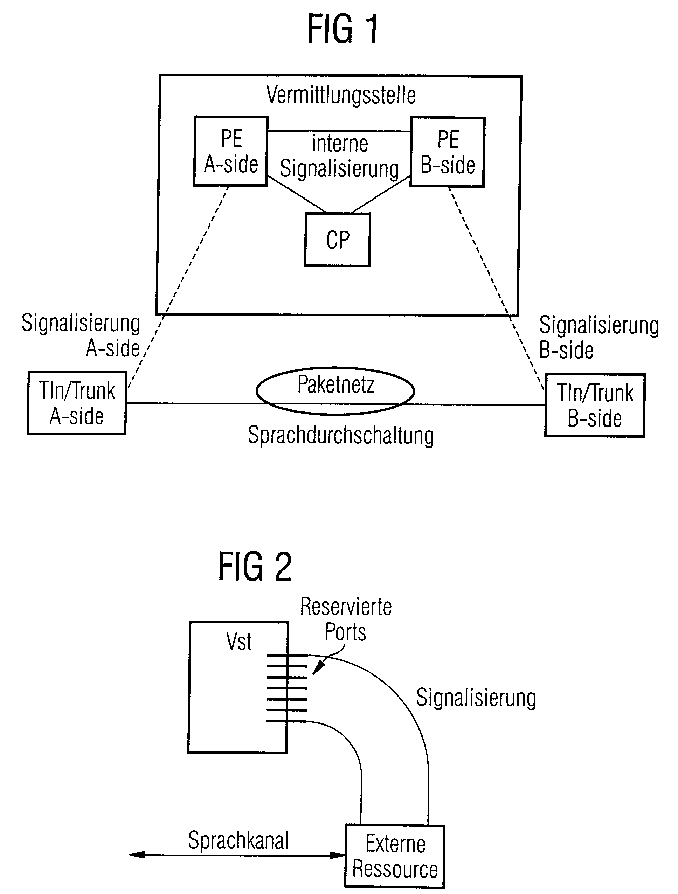

Wie in Fig. 1 gezeigt wird, werden bei der Telefonie über Paketnetze Signalisierung und Sprache disassoziiert auf getrennten Wegen geführt, es wird also streng zwischen sog. "Call Control" (d.h. Signalisierung) und "Routing" (Wegelenkung der Nutzdaten bzw. Sprache) unterschieden. Die peripheren Einrichtungen haben dann nur noch die Aufgabe der Protokollverarbeitung und/oder -konversion, und es entfallen die Beschränkungen der peripheren Einrichtungen hinsichtlich Ressourcenpool und Anzahl der terminierbaren Sprachkanälen.

Oft wird die physikalische Terminierung der Sprachkanäle von externen vermittlungstechnischen Ressourcen bewältigt, die aus Sicht des Vermittlungsknotens wie die Ports eines "klassischen" Vermittlungsknotens eingerichtet sind. Mit anderen Worten, es erfolgt eine Abbildung von Ports der Vermittlungsstelle auf Sprachkanäle der externen vermittlungstechnischen Ressource, wie in Fig. 2 gezeigt wird, wobei die Anzahl der insgesamt verfügbaren Sprachkanäle der externen Ressource der Anzahl der Ports entspricht. Die Zahl der Ports, die der externen Ressource dabei zugeteilt sind, hängt von der physikalischen Leistung, z. B. Speicherkapazität und Prozessorleistung der externen Ressource, ab.

Beansprucht jede sprachkanalbezogene Funktion die externe Ressource in gleichem Maße, dann kann die Anzahl der zugeordneten Ports so vorgegeben werden, dass die Ressource bei maximaler Portbelegung voll ausgelastet ist. Dieses Verfahren wird ineffizient, wenn verschiedene sprachkanalbezogene Funktionen die Ressource unterschiedlich belasten, ohne dass das durch die Signalisierung ersichtlich und damit für die Vermittlungsstelle berechenbar wäre.

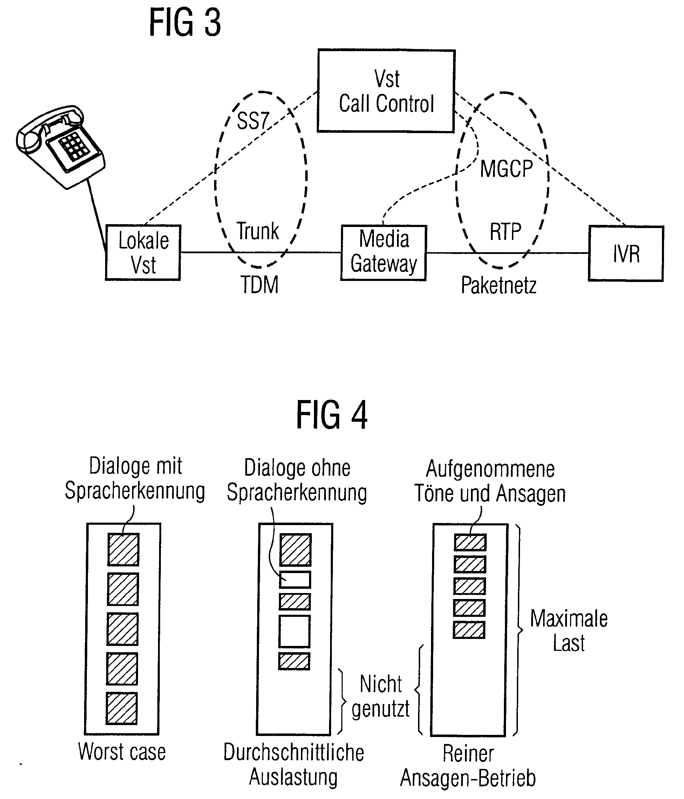

Als Beispiel wird in Fig. 3 eine Vermittlungsstelle gezeigt, die als externe vermittlungstechnische Ressource eine externe Dialogmaschine (IVR, Interactive Voice Ressource) im Paketnetz steuert. Werden sowohl Dialoge mit Spracherkennung als auch einfache Ansagen ohne Spracherkennung vom IVR-System unterstützt, kann die Belastung pro Sprachkanal stark variieren. Zur klareren Darstellung wird im Folgenden von dem Beispiel einer externen Dialogmaschine ausgegangen, die vorliegende Erfindung bezieht sich jedoch im Allgemeinen auf eine externe vermittlungstechnische Ressource, die sprachkanalbezogene Funktionen bereitstellt.

Die momentane Gesamtbelastung der Dialogmaschine ist nur auf der externen vermittlungstechnischen Ressource bekannt und eine darauf basierende portbezogenene Außensteuerung ist beim Stand der Technik nicht möglich. Eine Bilanzierung (d.h. eine Berechnung der momentanen Auslastung der vermittlungstechnischen Ressource) ist auf dem Vermittlungsknoten auch nicht durchführbar, da dies die Einführung spezieller, ressourcenabhängiger Mechanismen und Protokolle erfordert. Daher muss bei der Zuordnung von Ports zum IVR-System von einem "Worst Case Scenario" ausgegangen werden, wodurch im Normalbetrieb die Kapazität bei weitem nicht ausgenutzt wird, wie in Fig. 4 verdeutlicht wird.

Beim Stand der Technik werden Ansagen im TDM-Netz bereitgestellt, indem periphere Einrichtungen mit Hardware-Modulen zur Bereitstellung von Ansagen und DTMF-(Discrete Tone Multi Frequency) bzw. Spracherkennung in die Vermittlungsstelle eingebracht werden. Zum Abspielen einer sprachkanalbezogenen Funktion wie einer Ansage oder eines Dialoges wird der Teilnehmer bzw. Trunk (Verbindung zu einer fernen Vermittlungsstelle) über eine 64 kbit/s Durchschaltung auf ein Port dieser speziellen peripheren Einrichtung für Ansagen und Dialoge geschaltet.

Aus vermittlungstechnischer Sicht handelt es sich dabei um eine Durchschaltung einer von einer A-seitigen peripheren Einrichtung über das Koppelnetz zur B-seitigen peripheren Einrichtung mit Ansage- und Dialogfunktionalität geführten Verbindung. Das B-seitige Ansage- und Dialogport wirkt wie ein B-seitiger Trunk. Die Auswahl der zu spielenden Ansageund Dialogfunktion erfolgt durch vermittlungsstelleninterne Signalisierung zur peripheren Einrichtung mit Ansage- und Dialogfunktion oder ist fest vordefiniert.

Die Vorteile dieses Verfahrens bestehen darin, dass die Ansage- und Dialogfunktion in die Vermittlungsstelle integriert sind. Somit ist die Bereitstellung der Ansage- und Dialogfunktionen kostengünstig und es kann ein breiter Zugriff auf Hardware-Funktionalitäten der peripheren Einrichtungen für Ansage- und Dialogfunktionalität erfolgen.

Jedoch sind die Ansage- und Dialogfunktionen nicht oder nur mit einem vorgelagertem Gateway anwendbar, wenn der Nutzkanal paketbasiert und außerhalb der Vermittlungsstelle geführt ist. Weiterhin ist in diesem Fall eine Wandlung von PCM/TDM-Daten (Pulse Code Modulation/Time Division Multiplex) auf Daten für Paketnetzbetrieb erforderlich. Außerdem liegt dabei die Nutzdatenlast für Ansagen und Dialoge bei der steuernden Vermittlungsstelle und es erfolgt eine Sprachqualitätseinbuße durch die beschriebene Wandlung der Nutzdaten bzw. Sprachdaten.

Beim Stand der Technik kann die Bereitstellung von Ansagen und Dialogen andererseits durch externe Systeme (externe vermittlungstechnische Ressourcen) im Paketnetz erfolgen. Dabei werden Ansagen und Dialoge entweder am Netzübergang zwischen Paketnetz (z.B. Internet) und TDM-Netz (klassisches Fernsprechnetz) bereitgestellt oder durch eigens für diese Funktion konzipierte paketbasierte IVR-Systeme. Hierbei erfolgt die Steuerung der Ansage- und Dialogfunktion durch einen die Verbindung steuernden Call Control-Server im Paketnetz.

Die Vorteile dieses Verfahrens bestehen darin, dass diese externen vermittlungstechnischen Ressourcen in Paketnetzen verwendet werden können, ohne dass eine überflüssige Wandlung der Nutzdaten erforderlich wäre. Darüber hinaus sind flexiblere Einsatzmöglichkeiten durch Verknüpfung mit Internet-Services gegeben.

Jedoch sind bei dieser Lösung die Funktionen des IVR-Systems für eine Vermittlungsstelle, die die über das Paketnetz geführten Verbindungen steuert, nicht direkt ansteuerbar und nutzbar.

Die Vorteile beider Lösungen lassen sich vereinen, indem die paketnetzbasierte Ressource, also das IVR-System, direkt von einer TDM-Vermittlungsstelle zwecks Call Control gesteuert wird, wie in Fig. 3 dargestellt.

Die Aufgabe der vorliegenden Erfindung ist somit, ein Verfahren zur Laststeuerung einer externen vermittlungstechnischen Ressource zum Bereitstellen von sprachkanalbezogenen Funktionen, eine vermittlungstechnische Ressource und einen Vermittlungsknoten zur Durchführung dieses Verfahrens bereitzustellen, bei denen eine optimale Auslastung einer externen vermittlungstechnischen Ressource bei gleichzeitiger Vermeidung einer Überlastung dieser Ressource ermöglicht wird.

Diese Aufgabe wird durch ein Verfahren zur Laststeuerung einer externen vermittlungstechnischen Ressource zum Bereitstellen von sprachkanalbezogenen Funktionen gemäß dem beigefügten Anspruch 1, sowie einer vermittlungstechnischen Ressource und einem Vermittlungsknoten zur Durchführung dieses Verfahrens gemäß den beigefügten Ansprüchen 6 und 7 gelöst.

Gemäß der vorliegenden Erfindung erfolgt eine Regelung der Anzahl der verfügbaren Ports zwischen dem Vermittlungsknoten und der externen Ressource in Abhängigkeit von der Auslastung der externen Ressource.

Dazu wird in der externen Ressource die physikalische Auslastung ermittelt und bei Über- und/oder Unterschreiten eines bestimmten Schwellwertes, der ein Maß für die Auslastung dieser Ressource darstellt, eine entsprechende Signalisierung von der Ressource an den Vermittlungsknoten gesendet.

Der Vermittlungsknoten sperrt oder gibt eine entsprechende Anzahl von Ports frei, über die die sprachkanalbezogenen Funktionen verfügbar sind.

Gemäß der vorliegenden Erfindung wird somit die Zuordnung von Ports der Vermittlungsstelle zu der externen Ressource so gesteuert, dass die Zahl der verfügbaren Ports automatisch an die momentane Auslastung der externen Ressource angepasst wird. Auf diese weise erfolgt eine Laststeuerung der externen vermittlungstechnischen Ressource.

Die Kommunikation zwischen Vermittlungsstelle und externer Ressource erfolgt hierbei ausschließlich durch Übergabe von Maintenance-Information, nämlich Inbetriebnahme oder Sperrung von Ports. Also kann ein standardisiertes Kommunikationsprotokoll verwendet werden, und es ist keine proprietäre Bindung zwischen Vermittlungsstelle und Ressource über spezifische Schnittstellen notwendig.

Außerdem muss auf diese Weise keine aufwendige Bilanzierung hinsichtlich der Auslastung der externen Ressource von der Vermittlungsstelle vorgenommen werden.

Vorteilhafte Ausgestaltungen der vorliegenden Erfindung sind in den jeweiligen Unteransprüchen wiedergegeben.

Die Auslastung der vermittlungstechnischen Ressource wird beispielsweise hinsichtlich der augenblicklichen Auslastung einer Prozessor- und Speicherkapazität der Ressource ermittelt.

Die Ermittlung der Auslastung erfolgt dabei vorteilhafterweise zyklisch nach vorgegebenen Zeitabständen.

Bei Überschreiten eines bestimmten Schwellwertes werden Ports von der Vermittlungsstelle gesperrt, wobei die Anzahl der gesperrten Ports von dem Grad der Auslastung abhängt.

Im Gegensatz dazu werden von der Vermittlungsstelle Ports bei Unterschreiten eines bestimmten Schwellwertes freigegeben, wobei die Anzahl der freigegebenen Ports ebenfalls von dem Grad der Auslastung abhängt; die Schwellwerte zum Sperren und Freigeben von Ports werden in der Regel einen unterschiedlichen Wert aufweisen.

Die vorliegende Erfindung wird nachfolgend anhand bevorzugter Ausführungsbeispiele unter Bezug auf die beigefügten Figuren näher erläutert, in denen zeigen

Fig. 1 eine Darstellung der Übertragungswege von Sprache und Signalisierung,

Fig. 2 eine Darstellung der portbezogenen Ressourcensteuerung,

Fig. 3 ein Beispiel einer externen Ansage- und Dialogmaschine in einem Paketnetz,

Fig. 4 eine Darstellung schlechter Nutzung der Kapazitäten der Ansage- und Dialogmaschine,

Fig. 5 eine schematische Darstellung der erfindungsgemäßen externen vermittlungstechnischen Ressource und des erfindungsgemäßen Vermittlungsknotens,

Fig. 6 ein Beispiel für die Laststeuerung einer externen Ressource,

Fig. 7 eine schematische Darstellung der Auslastung der externen Ressource gemäß der vorliegenden Erfindung, und

Fig. 8 zeigt ein Beispiel für die Anwendung der vorliegenden Erfindung in einem Telekommunikationsnetz.

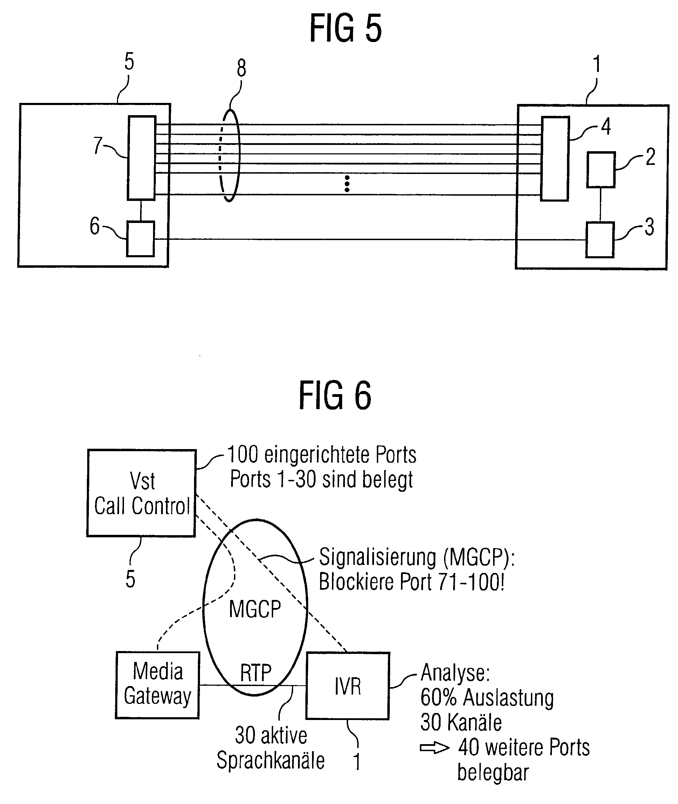

Fig. 5 zeigt eine schematische Darstellung der erfindungsgemäßen externen Ressource 1 und des erfindungsgemäßen Vermittlungsknotens 5.

Die externe Ressource 1 enthält eine Ermittlungseinrichtung 2 zum Ermitteln der Auslastung der Ressource 1. Diese Ermittlung erfolgt dabei nach bestimmten Kriterien, wie z. B. augenblickliche Prozessor- und/oder Speicherauslastung, usw.

Erreicht die Auslastung einen bestimmten oberen oder unteren Schwellwert, der als Maßstab für den Grad der Auslastung dient, so werden durch die Signalisiereinrichtung 3 entsprechende Signalisiermeldungen an den Vermittlungsknoten 5 versendet.

Zu diesem Zweck verfügt der erfindungsgemäße Vermittlungsknoten 5 über eine Empfangseinrichtung 6 zum Empfangen der Signalisiermeldungen. Weiterhin verfügt der erfindungsgemäße Vermittlungsknoten 5 über eine Regeleinrichtung 7 zum Regulieren der Anzahl der verfügbaren Ports in Abhängigkeit von der Auslastung der Ressource 1.

Dabei werden beim Überschreiten eines bestimmten Schwellwertes bestimmte sprachkanalbezogene Funktionen gesperrt und beim Unterschreiten eines bestimmten Schwellwertes wieder freigegeben; die beiden Schwellwerte werden in der Regel einen unterschiedlichen Wert aufweisen.

Fig. 6 zeigt ein Beispiel für die Laststeuerung einer Ansageund Dialogmaschine (externe vermittlungstechnische Ressource 1); die Bezugszeichen beziehen sich weiterhin auf Fig. 5.

Das erfindungsgemäße Verfahren beruht auf dem lastabhängigen Blockieren und Freigeben von sprachkanalbezogenen Funktionen des Vermittlungsknotens 5 durch portspezifische Signalisierung zwischen dem in dem Vermittlungsknoten 5 befindlichen Control-Server und der externen vermittlungstechnischen Ressource (z.B. IVR-Server).

Als Basis dient die erwartete Anzahl von Sprachkanälen, die die externe Ressource bei geringer oder durchschnittlicher Auslastung pro Kanal bedienen kann. Auf der Vermittlungsstelle wird im Gegensatz zum Stand der Technik eine entsprechend hohe Anzahl von sprachkanalbezogenen Funktionen für die Ressource bereitgestellt.

Die externe Ressource 1 prüft nun im laufenden Betrieb zyklisch die aktuelle Belastung (zwischen 0% und 100%) und vergleicht sie mit der momentanen Anzahl der bedienten Sprachkanäle. Übersteigt die resultierende Messgröße einen kritischen Wert, dann fordert die Ressource 1 die Vermittlungsstelle 5 auf, eine gewisse Anzahl der noch unbenutzten sprachkanalbezogenen Funktionen zu blockieren. Ein einfaches Beispiel einer solchen Messgröße ist

$$\lambda = \frac{noch\ verf\ddot{u}gbare\ Ports}{noch\ belegbare\ Ports} = \frac{unblockierte\ Ports\ -\ belegte\ Sprachkan\ddot{a}le}{(1\ -\ Belastung)\ *\ eingerichtete\ Ports}$$

wobei "noch verfügbare Ports" die Anzahl der Ports ist, die momentan weder blockiert noch belegt sind, und "noch belegbare Ports" die Anzahl der Ports ist, die voraussichtlich noch belegt werden können um die externe vermittlungstechnische Ressource optimal auszunutzen. Weiterhin ist "unblockierte Ports" die Anzahl der nicht blockierten (d.h. der verfügbaren und der schon belegten) Ports, die "belegten Sprachkanäle" die Anzahl der Sprachkanäle ist, die momentan belegt sind (d.h. die Anzahl der Sprachkanäle, über die momentan die Funktionen der externen Ressource abgerufen werden) und "eingerichtete Ports" die Anzahl der maximalen Ports ist.

Die Formel geht davon aus, das bei durchschnittlicher Nutzung eine Belegung aller eingerichteten Ports genau 100% Last erzeugen würde. Die verbleibende Restlast (also 1-Belastung) würde also voraussichtlich durch einen entsprechenden Prozentsatz der insgesamt eingerichteten Ports vollständig ausgeschöpft werden.

Genauso wird bei Unterschreiten einer unteren Grenze die Freigabe blockierter Ports angefordert.

Standardisierte Signalisierungsprotokolle, wie z. B. MGCP (Media Gateway Control Protocol), die der Kommunikation zwischen Vermittlungsstelle (erfindungsgemäßer Vermittlungsknoten) und externer Ressource dienen, müssen die Übergabe von sog. Maintenance-Informationen, d.h. von Wartungsinformationen, unterstützen, da beim Stand der Technik die Steuerintelligenz in der Vermittlungsstelle liegt. Dies beinhaltet auch das Sperren und Freigeben von Ports im Falle einer Fehlfunktion der externen Ressource. Interpretiert man zu hohe oder zu geringe Werte der obigen Messgröße λ als Maintenance-Fall, so kann das Signalisierungsprotokoll standardgemäß verwendet werden, um die Blockade oder Freigabe der gewünschten Anzahl von Ports durch die Vermittlungsstelle anzufordern.

In Fig. 6 misst die externe Ressource 1 eine momentane Belastung von 60%, hervorgerufen durch nur 30 belegte Ports, d.h. hervorgerufen durch 30 aktive Sprachkanäle. In diesem Beispiel werden die Sprachkanäle via RTP (Real Time Protocol) über ein Paketdatennetz mittels eines sog. Media Gateways übertragen. Der Media Gateway hat die Aufgabe, den Netzübergang zwischen einem Paketnetz und einem Sprachnetz, i.d.R. dem öffentlichen Fernsprechnetz, bereitzustellen.

Würden die noch zur Verfügung stehenden 40% der Ressource durchschnittlich belegt, könnten 40% von 100 eingerichteten Ports, also 40 weitere Kanäle hinzugeschaltet werden (bei den ursprünglich 100 eingerichteten Ports wurde ja von einer durchschnittlichen Belastung pro Kanal ausgegangen). Zusammen mit den bereits aktiven 30 Sprachkanälen können also momentan maximal 70 der eingerichteten 100 Ports benutzt werden. Ports 71 bis 100 werden also vorübergehend durch die Vermittlungsstelle gesperrt.

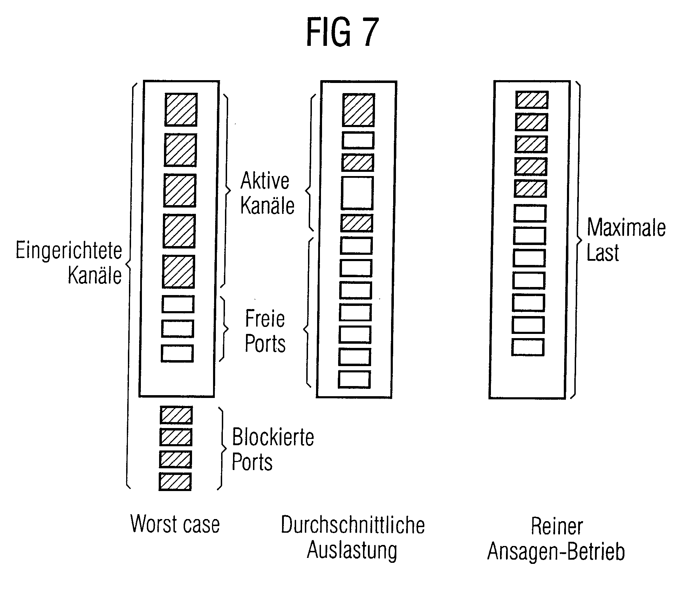

Wie Fig. 7 zeigt, werden durch dieses Verfahren der externen Ressource effektiv eine variable Anzahl von Ports zur Verfügung gestellt, die ohne Zuhilfenahme von speziellen Schnittstellen oder Protokollen der aktuellen Auslastung der Ressource angepasst werden können. Die Vermittlungsstelle muss dabei keine Information über den Inhalt der angelegten Sprachkanäle erhalten und bilanzieren. Externe Ressourcen können durch das beschriebene Verfahren erheblich effizienter dimensioniert werden, d. h. es findet keine "Worst Case"-Dimensionierung statt, wie das bei einem herkömmlichen Verfahren nötig wäre.

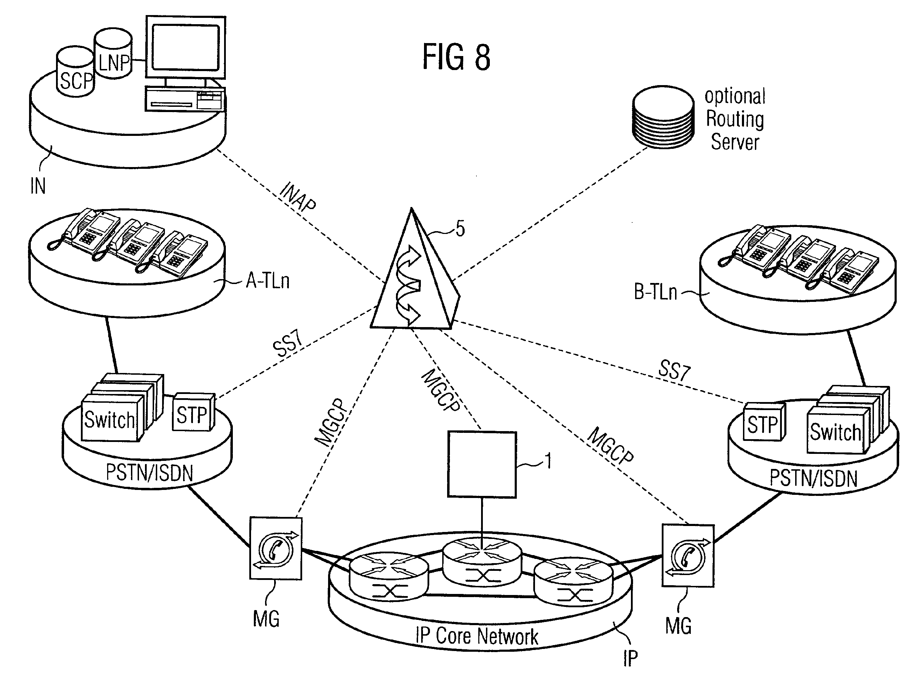

Fig. 8 zeigt ein Beispiel für die Anwendung der vorliegenden Erfindung in einem Telekommunikationsnetz.

Die zentrale Steuerung erfolgt dabei von einem Vermittlungsknoten 5, in diesem Beispiel ein Signalisierknoten. Dieser Vermittlungsknoten übertragt Signalisiermeldungen, z.B. zum Intelligenten Netz IN via INAP (Intelligent Network Application Part), zu öffentlichen Fernsprechnetzen (ISDN, PSTN) z.B. zur Verbindung zwischen einem A-Teilnehmer (A-Tln) und einem B-Teilnehmer (B-Tln), zu Servern für Routinginformationen (optional Routing Server), usw.

Weiterhin steuert dieser Vermittlungsknoten 1 externe vermittlungstechnische Ressourcen 1, Netzübergangsknoten (Media Gateways, MG), usw. Die Netzübergangsknoten bilden die Schnittstelle zwischen einem Paketnetz (z. B. einem IP-Netzwerk) und einem öffentlichen Fernsprechnetz.

Die Signalisierung erfolgt dabei über verschiedene Protokolle, wie z.B. dem Zeichengabesystem Nr. 7 (SS7) und dem Media Gateway Control Protocol (MGCP oder H.248). Zur Teilnehmersignalisierung kann z.B das Protokoll H.323 für Paketdatenübertragung verwendet werden.

Außerhalb des Vermittlungsknotens 5 verfügbare, IP-basierte IVR-Ressourcen werden als virtuelle Ansageports an einem Media Gateway neuen Typs modelliert. Hierbei handelt es sich um ein externes, universell einsetzbares IVR-System, das nur die Aufgabe der Bereitstellung der IVR-Funktionalität besitzt. Diese IVR-Ressourcen werden mittels MGCP/H.248 durch den Vermittlungsknoten 5 gesteuert.

Soll eine Ansage- und Dialogfunktion in einem externen IVR benutzt werden, so erfolgt eine B-seitige Belegung eines Ansage-/Dialogports. Die Art der IVR-Funktion wird sodann durch weitere MGCP/H.248-Signalisierung dem externen IVR-System (Interactive Voice Response, externe vermittlungstechnische Ressource 1) mitgeteilt.

Im Hinblick auf geringeren Änderungsaufwand und optimierte Hardware Kosten des Vermittlungsknotens 5 erfolgt die Steuerung der virtuellen Ansage/Dialogports auf Basis virtueller LTG's (Line Trunk Groups) mit Ansage- und Dialogfunktion. Hierdurch bleibt insbesondere die interne Schnittstelle des Vermittlungsknotens zwischen den die IVR-Funktion anfordernden Funktionen (in anderen peripheren Einrichtungen oder im Central Processor) unverändert, was den Entwicklungsaufwand wesentlich verringert.

In dieser Anwendung hat die nunmehr virtuelle periphere Einrichtung zur Steuerung der IVR-Funktion im Wesentlichen die Funktion des Weiterreichens von IVR-Auftragsdaten und der Weiterleitung von Rückmeldungen des IVR-Systems. Die im klassischen Anwendungsfall vorhandene Steuerung der IVR-spezifischen Hardware Module der peripheren Einrichtung mit IVR-Funktion auf vergleichsweise niedrigem logischen Level entfällt.

Das IVR-System 1 verhält sich hinsichtlich der Steuerung durch den Vermittlungsknoten 5 wie ein Media Gateway. Teilausfälle oder Totalausfälle der externen Ressource 1 werden über MGCP (oder H.248) auf temporäre Nichtverfügbarkeit von virtuellen Ansage- und Dialogports abgebildet (d.h. Sperren von Ports), welche dann von dem Vermittlungsknoten 5 nicht mehr belegt werden können. Genau diese Ausfallsteuerung kann nun aufgegriffen werden, um das erfindungsgemäße Verfahren zur Laststeuerung nutzbar zu machen.

Der konkrete Algorithmus entspricht der in Fig. 6 beschriebenen Vorgehensweise. Die externe vermittlungstechnische Ressource 1 kennt die Anzahl der momentan zur Verfügung stehenden freien virtuellen Ports im Vermittlungsknoten 5. Aus der aktuell gemessenen Last und der Zahl der belegten Sprachkanäle errechnet es (zum Beispiel) nach der oben beschriebenen Formel in regelmäßigen Abständen eine Messgröße, welche die Auslastung der verfügbaren Ports beschreibt. Diese Formel ist nicht optimal; eine bessere, aber komplexere Formel würde hohe Auslastungen stärker gewichten.

Überschreitet diese Messgröße einen kritischen Wert (z.B. $\lambda$=1,5), dann berechnet die Ermitttlungseinrichtung der externen vermittlungstechnischen Ressource, wie viele zusätzliche Sprachkanäle es bei durchschnittlicher Belastung noch bedienen könnte, und fordert die Sperrung der überzähligen Kanäle an. Beim Beispiel von Fig. 6 wird 60% Auslastung bei 30 von 100 belegten Ports gemessen, also 0,4 * 100 = 40 noch belegbare Ports gegenüber 70 verfügbaren Ports. Das entspricht $\lambda$=1,75 und übersteigt damit den Schwellwert, also müssen Ports blockiert werden. Da bei einer zusätzlichen Belastbarkeit von 40% im Durchschnitt noch 40 weitere Kanäle bedient werden können, ergibt das insgesamt 70 Kanäle, die die externe Ressource 1 momentan ohne Überlast terminieren kann. Also werden dem Vermittlungsknoten 5 via MGCP 30 Ports gemeldet, die temporär nicht verfügbar sein sollen.

**Patentansprüche**

1. Verfahren zur Laststeuerung einer externen vermittlungstechnischen Ressource (1) zum Bereitstellen von sprachkanalbezogenen Funktionen in einem Vermittlungsknoten (5), wobei die Ressource (1) durch den Vermittlungsknoten (5) gesteuert wird,
   mit den Schritten
   Ermitteln der Auslastung der Ressource (1) durch die Ressource (1),
   Signalisierung der Auslastung der Ressource (1) bei Über und/oder Unterschreiten eines vorgegebenen Schwellwertes von der Ressource (1) an den Vermittlungsknoten (5), und
   Regulieren der Anzahl der verfügbaren sprachkanalbezogenen Funktionen in Abhängigkeit von der Auslastung der Ressource (1) durch den Vermittlungsknoten (5).

2. Verfahren gemäß Anspruch 1,
   **dadurch gekennzeichnet,**
   **dass** die Auslastung der Ressource (1) hinsichtlich der augenblicklichen Auslastung einer Prozessor- und Speicherkapazität der Ressource (1) ermittelt wird.

3. Verfahren gemäß Anspruch 1 oder 2,
   **dadurch gekennzeichnet,**
   **dass** die Ermittlung der Auslastung zyklisch nach vorgegebenen Zeitabständen erfolgt.

4. Verfahren gemäß Anspruch 1, 2 oder 3,
   **dadurch gekennzeichnet,**
   **dass** sprachkanalbezogene Funktionen bei Überschreiten eines bestimmten Schwellwertes gesperrt werden, wobei die Anzahl der gesperrten sprachkanalbezogenen Funktionen von dem Grad der Auslastung abhängt.

5. Verfahren gemäß einem der Ansprüche 1 bis 4,
   **dadurch gekennzeichnet,**
   **dass** sprachkanalbezogene Funktionen bei Unterschreiten eines bestimmten Schwellwertes freigegeben werden, wobei die Anzahl der freigegebenen sprachkanalbezogenen Funktionen von dem Grad der Auslastung abhängt.

6. Verfahren gemäß einem der Ansprüche 1 bis 5,
   **dadurch gekennzeichnet,**
   **dass** sprachkanalbezogene Funktionen über mindestens einen Port bereitgestellt werden.

7. Vermittlungstechnische Ressource (1) zur Durchführung des Verfahrens gemäß einem der Ansprüche 1 bis 6,
   **gekennzeichnet durch**
   eine Ermittlungseinrichtung (2) zum Ermitteln der augenblicklichen Auslastung der Ressource (1), und
   eine Signalisiereinrichtung (3) zum Signalisieren der Auslastung der Ressource (1) bei Über- und/oder Unterschreiten eines vorgegebenen Schwellwertes von der Ressource (1) an einen Vermittlungsknoten (5).

8. Vermittlungsknoten (5) zur Durchführung des Verfahren gemäß einem der Ansprüche 1 bis 6,
   **gekennzeichnet durch**
   eine Empfangseinrichtung (6) zum Empfangen von Signalisiermeldungen, die Informationen über die augenblickliche Auslastung einer vermittlungstechnischen Ressource (1) enthalten, und

eine Regeleinrichtung (7) zum Regulieren der Anzahl der verfügbaren sprachkanalbezogenen Funktionen in Abhängigkeit von der Auslastung der Ressource (1).

9. Vermittlungsknoten (5) zur Durchführung des Verfahren gemäß einem der Ansprüche 1 bis 6,
   **gekennzeichnet durch**
   die Bereitstellung sprachkanalbasierter Funktionen über mindestens einen Port.

# FIG 1

Vermittlungsstelle

PE
A-side

interne
Signalisierung

PE
B-side

CP

Signalisierung
A-side

Signalisierung
B-side

Tln/Trunk
A-side

Paketnetz

Tln/Trunk
B-side

Sprachdurchschaltung

# FIG 2

Reservierte
Ports

Vst

Signalisierung

Sprachkanal

Externe
Ressource

# FIG 3

Vst Call Control

SS7

MGCP

RTP

Trunk

Lokale Vst

TDM

Media Gateway

Paketnetz

IVR

# FIG 4

Dialoge mit Spracherkennung

Dialoge ohne Spracherkennung

Aufgenommene Töne und Ansagen

Maximale Last

Nicht genutzt

Worst case

Durchschnittliche Auslastung

Reiner Ansagen-Betrieb

# FIG 5

# FIG 6

100 eingerichtete Ports
Ports 1-30 sind belegt

Vst
Call Control

5

Signalisierung (MGCP):
Blockiere Port 71-100!

MGCP

Media
Gateway

RTP

IVR

30 aktive
Sprachkanäle    1

Analyse:
60% Auslastung
30 Kanäle
⇒ 40 weitere Ports
   belegbar

# FIG 7

Eingerichtete
Kanäle

Aktive
Kanäle

Freie
Ports

Blockierte
Ports

Maximale
Last

Worst case

Durchschnittliche
Auslastung

Reiner
Ansagen-Betrieb

# FIG 8

EP 1 289 335 A2